# EUROPÄISCHE PATENTSCHRIFT

(11) **EP 1 344 450 B1**
(45) Veröffentlichungstag und Bekanntmachung des Hinweises auf die Patenterteilung: **08.06.2005**
(21) Anmeldenummer: 03004974.6
(22) Anmeldetag: 10.03.2003
(51) Int. Cl.: A01K 1/00, A01K 1/02

(54) **Schwenkbare Abtrennvorrichtung für einen Sauenstall sowie Kombinationen dieser Vorrichtung zu einem Sauenstall für Gruppenhaltung**
Pivoting separating device for a sow pen and combination of such a device with a sow pen for raising sows in groups
Dispositif pivotant de séparation pour étable pour truies et la combinaison d'un tel dispositif avec une étable pour truies pour l'élevage en groupe

(30) Priorität: 12.03.2002 DE 10210796
(43) Veröffentlichungstag der Anmeldung: 17.09.2003
(73) Patentinhaber: Oberndörfer, Erwin, 74575 Schrozberg (DE)
(72) Erfinder: Oberndörfer, Erwin, 74575 Schrozberg (DE)
(74) Vertreter: Pohlmann, Eckart, Dipl.-Phys.

(56) Entgegenhaltungen:
- WO-A-99/27776

## Beschreibung

Die Erfindung betrifft eine schwenkbare Abtrennvorrichtung für einen Sauenstall für Gruppenhaltung sowie einen Sauenstall für Gruppenhaltung, der aus den schwenkbaren Abtrennvorrichtungen ausgebildet ist. Vgl. z.B. die Druckschrift WO-A-99/27776.

Es ist bekannt, Sauen, insbesondere tragende Sauen in Kastenständen zu halten; diese Einzelhaltung wird als Gegensatz zur Gruppenhaltung gesehen.

Aufgabe der Erfindung ist es, eine schwenkbare Abtrennvorrichtung für einen Sauenstall für Gruppenhaltung und einen Sauenstall, bestehend aus diesen schwenkbaren Abtrennvorrichtungen zur Verfügung zu stellen, bei denen jedoch jede Sau einen eigenen Fressstand aufweist, während des Fressens vor Attacken anderer Sauen geschützt ist, beliebig lange fressen kann, und wobei die Sauen während des Fressens gut beobachtet werden können. Darüber hinaus sollen bei Kontrollarbeiten wie bei Impfungen, Trächtigkeitsuntersuchungen und Pflege die Tiere in einzelnen Ständen voneinander trennbar sein. Gleichzeitig sollen die Vorteile der Gruppenhaltung, wie sie zunehmend auch vom Gesetzgeber gefordert wird, erzielt werden können.

Die erfindungsgemäße Aufgabe wird durch die Vorrichtung nach Anspruch 1 gelöst. Weitere Vorteile der Erfindung ergeben sich aus den Ausführungsformen gemäß Ansprüchen 2 bis 10.

Die Erfindung wird anhand der beiliegenden Figuren näher erläutert.
In Figur 1 wird in schematischem Vertikalschnitt eine Ausführungsform einer erfindungsgemäßen schwenkbaren Abtrennvorrichtung für einen Sauenstall für Gruppenhaltung wiedergegeben;
Figur 2 ist eine schematische Seitenansicht der Vorrichtung gemäß Figur 1 mit Fresstrog;
Figur 3 ist die Vorrichtung gemäß Figur 2 mit seitlichen Abtrennmitteln in heruntergelassenem Zustand und schematischer Wiedergabe der Hydraulik zum Schwenken der Abtrennmittel;
Figur 4 ist die Vorrichtung gemäß Figur 3 mit hochgeschwenkten Abtrennmitteln;
Figur 5 ist eine schematische Ansicht einer Kombination erfindungsgemäß fluchtender schwenkbarer Abtrennvorrichtungen zu einem Sauenstall.

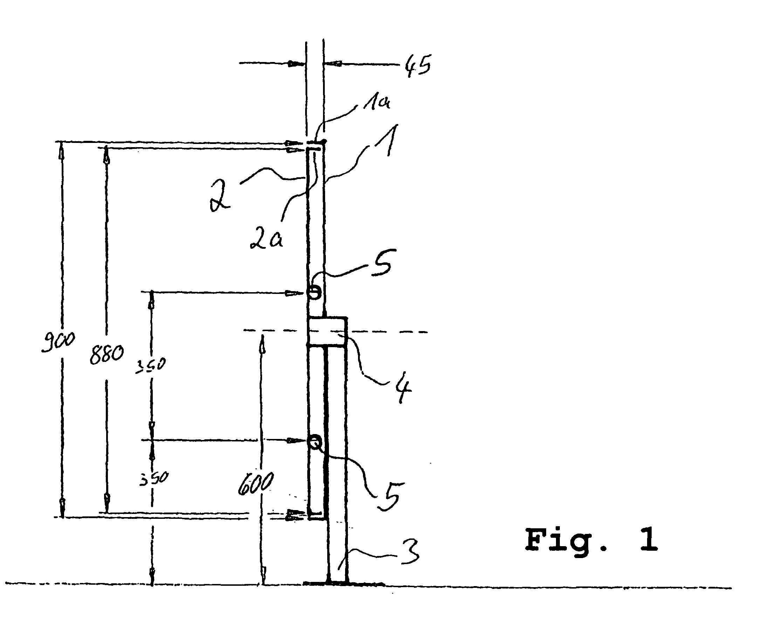

Gemäß Figur 1 besteht die abgebildete Ausführungsform der erfindungsgemäßen Abtrennvorrichtung aus einer schalenförmigen runden Scheibe 1 mit einem Rand 1a; diese Scheibe 1 ist fest mit einem Fuß 3 verbunden, der zur Verankerung im Stallboden ausgebildet ist.

In der schalenförmigen Scheibe 1 ist eine zweite schalenförmige Scheibe 2 etwas kleineren Durchmessers angeordnet, wobei der umlaufende Rand 2a der Scheibe 2, wie abgebildet, von dem Rand 1a der Scheibe 1 überfasst wird.

Die schalenförmige Scheibe 2 ist in der schalenförmigen Scheibe 1 drehbar um die Achse 4 im Fuß 3 gelagert. Abtrennmittel 5 zur seitlichen Begrenzung eines Sauenstandes sind auf, an oder in der Scheibe 2 gelagert.

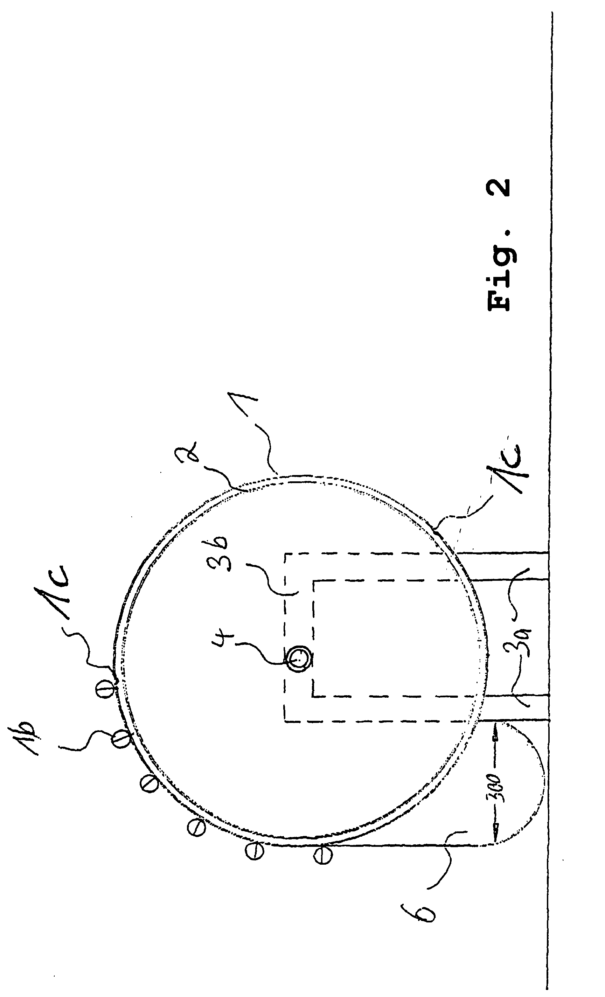

Figur 2 gibt die Vorrichtung gemäß Figur 1, 90° um die senkrechte Achse gedreht, wieder, wobei ein Futtertrog 6 an der Scheibe 1 in Bodennähe angeschlagen ist. Der Fuß 3 ist hier U-förmig mit den senkrechten Schenkeln 3a und dem waagerechten Schenkel 3b, in dem die Achse 4 angeordnet ist, ausgebildet.

Auf der Peripherie der Scheibe 1 sind Montagevorrichtungen 1b für einen weiter unten beschriebenen Anschlag angeordnet.

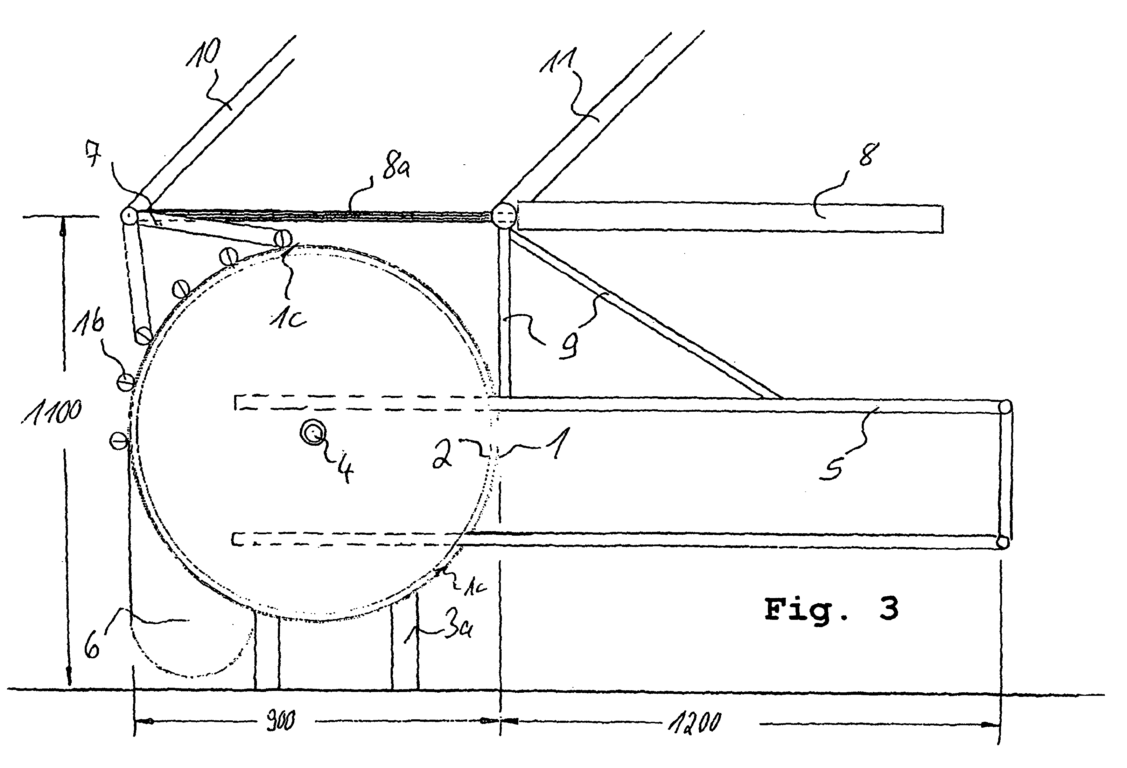

In Figur 3 ist die erfindungsgemäße Abtrennvorrichtung gemäß Figur 2 durch Darstellung der Abtrennmittel 5 vervollständigt; im vorliegenden Fall sind sie in Form eines U-förmigen Trennbügels ausgeführt. Dieser ist entweder außen oder, wie abgebildet, innen an der drehbaren Scheibe 2 angeordnet und mit einem sich vertikal erstreckenden rechtwinkligen Dreiecksbeschlag 9 versehen. Bevorzugt erstreckt sich das obere Ende des Anschlags bis etwas über die gedachte obere Horizontaltangente an die Scheibe 1.

Auf dem oberen Bereich des Randes der Scheibe 1 oberhalb des Futtertroges 6 ist ein Winkelbeschlag 7 angeschlagen, der sich ebenfalls bevorzugt über die obere Horizontaltangente an die Scheibe 1 erstreckt.

Die beiden Beschläge sind durch einen Hydraulikzylinder 8 mit Hydraulikkolben 8a verbunden, so dass durch Bewegung des Kolbens 8a im Zylinder 8 die Scheibe 2 mit Trennmitteln 5 um die Achse 4 schwenkbar ist. Die Anordnungsalternativen des Hydraulikzylinders 8 mit Hydraulikkolben 8a sind in den Ansprüchen 7 und 8 dargestellt.

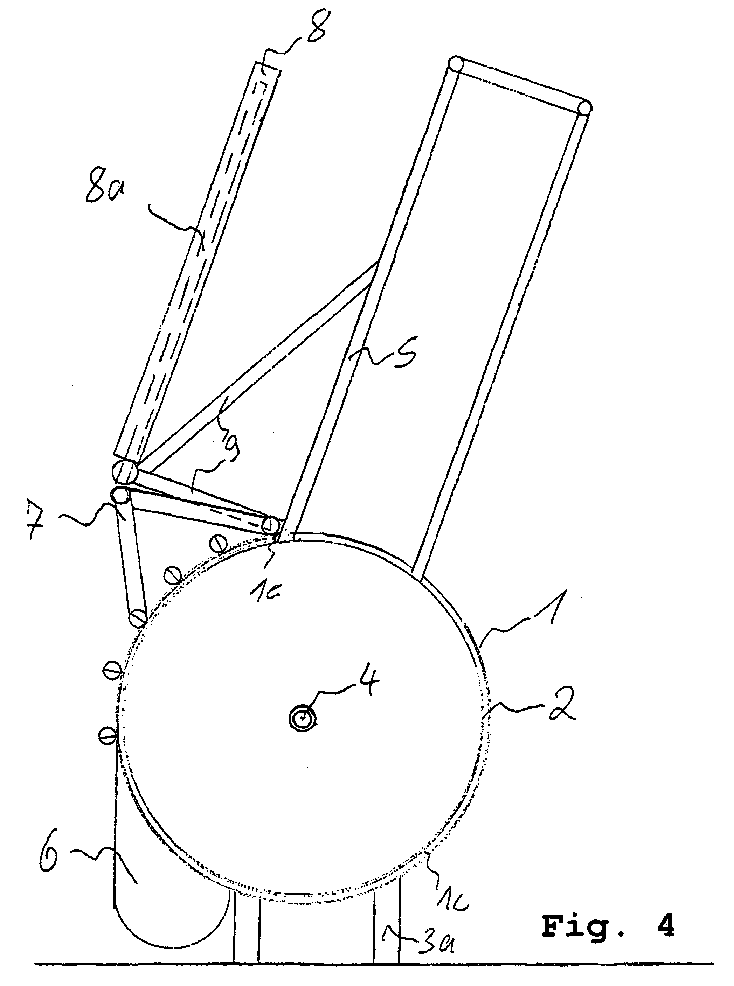

Figur 4 gibt die Ausführungsform gemäß Figur 3 wieder, wobei die Trennmittel 5 nach oben geschwenkt sind.

Erfindungsgemäß werden mehrere der erfindungsgemäßen Abtrennvorrichtungen fluchtend miteinander, beispielsweise im Abstand der Breite der Tröge 6, zusammengestellt und bilden dadurch einen erfindungsgemäßen Sauenstall.

Hierbei erstrecken sich bevorzugt die oberen Enden der Beschläge 7 und 9 über die obere Horizontaltangente an die Scheibe 1 und sind durch jeweils eine horizontal verlaufende Stange 10 bzw. 11 verbunden, wobei bevorzugt nur ein oder zwei Hydraulikzylinder 8 mit Kolben 8a zwischen den Stangen 10 und 11 zum Schwenken der Scheiben 2 mit Trennmitteln 5 vorgesehen sind. Bevorzugt sind an den freien Enden der Trennmittel 5 standardübliche Sauenstandtüren angeschlagen, so dass bei heruntergelassenen Trennmitteln 5 einzelne Tiere herausgenommen werden können.

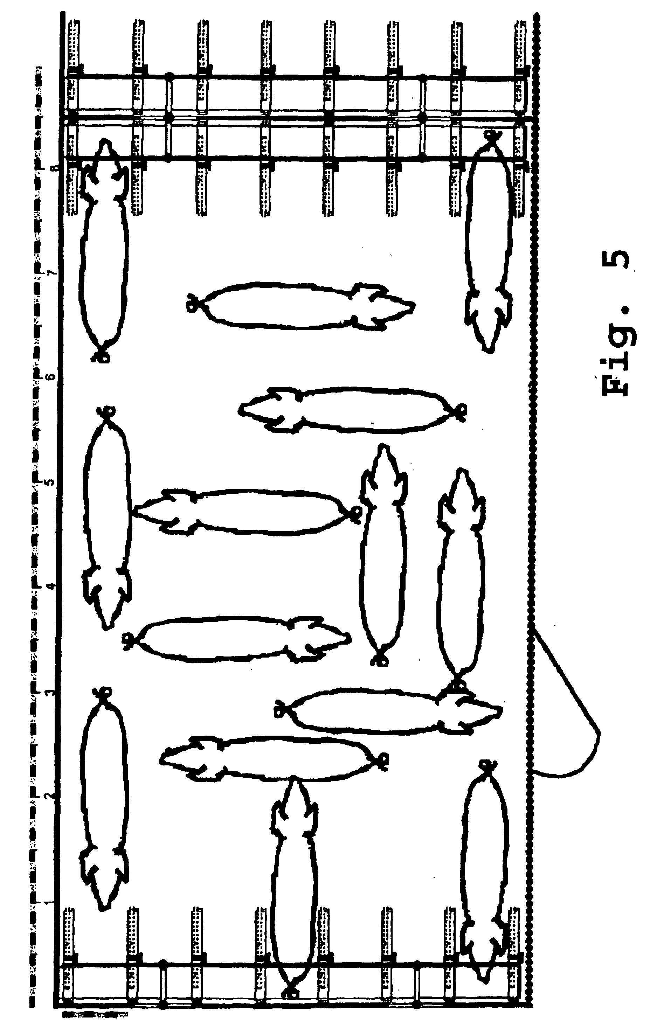

In Figur 5 wird eine Kombination der erfindungsgemäßen Abtrennvorrichtungen zu einem Sauenstall wiedergegeben, bei dem die Abtrennvorrichtungen 5 herabgelassen sind. Hierbei stehen sich in einem umschlossenen Raum zwei Reihen der Vorrichtungen gegenüber, wobei im heruntergelassenen Zustand der Trennmittel 5 (wie abgebildet) ein mittlerer Treibgang gebildet wird, wenn die Sauenstandtüren geschlossen sind; in geöffnetem Zustand kann beispielsweise die Fütterung durchgeführt werden. Das Schließen der Sauenstalltüren während der Fütterung ermöglicht die selektive Herausnahme einzelner Sauen. In hochgefahrenem Zustand der Trennmittel 5 steht praktisch die gesamte Fläche des umbauten Raumes den Sauen zur Verfügung.

Die erfindungsgemäßen Abtrennvorrichtungen, miteinander kombiniert zu einem Sauenstall, vereinigen auf überraschend einfache Weise die Vorteile der Kastenstände mit denen der Gruppenhaltung, zumal das Hochklappen der Abtrennmittel zu 75% realisiert wird, so dass in diesem Zustand der erfindungsgemäßen Abtrennvorrichtungen Gruppenhaltung verwirklicht ist; der hydraulisch-mechanische oder entsprechend ausgebildete elektrische Antrieb ermöglicht nicht nur einfache und wirkungsvolle Bedienung sondern auch eine Programmierung dieses Vorganges. Darüber hinaus verhindert die kreisförmige Ausbildung der Scheiben 1 und 2, und im besonderen in der Ausführungsform als schalenförmige Scheiben, Verletzungen durch Einquetschen von Körperteilen der Tiere bei Betrieb der Vorrichtung.

## Patentansprüche

1. Schwenkbare Abtrennvorrichtung für einen Sauenstall für Gruppenhaltung mit einer feststehenden kreisförmigen Scheibe (1) mit einem Fuß (3), auf oder in der eine zweite kreisförmige Scheibe (2) zentrisch um eine Achse (4) drehbar gelagert ist, wobei auf der zweiten Scheibe (2) Abtrennmittel (5) angeordnet sind.

2. Vorrichtung nach Anspruch 1, **dadurch gekennzeichnet, dass** die feststehende Scheibe (1) einen umlaufenden Rand (1a) aufweist; dass die zweite Scheibe (2) einen etwas kleineren Durchmesser als die feststehende Scheibe (1) besitzt und ebenfalls einen umlaufenden Rand (2a) aufweist, wobei die feststehende Scheibe (1) die zweite Scheibe (2) deckelförmig übergreift.

3. Vorrichtung nach Anspruch 1 oder 2, **dadurch gekennzeichnet, dass** an der feststehenden Scheibe (1) in Bödennähe ein Fresstrog (6) angeordnet ist.

4. Vorrichtung nach mindestens einem der Ansprüche 1 bis 3, **dadurch gekennzeichnet, dass** der Fuß (3) U-förmig mit zwei im Wesentlichen senkrecht ausgebildeten Schenkeln (3a) und einem im wesentlichen waagerecht ausgebildeten Schenkel (3b), in dem die Achse (4) gelagert ist, ausgebildet ist.

5. Vorrichtung nach mindestens einem der vorhergehenden Ansprüche, **dadurch gekennzeichnet, dass** das Abtrennmittel (5) als Trenngitter ausgebildet ist.

6. Vorrichtung nach mindestens einem der Ansprüche 1 bis 4, **dadurch gekennzeichnet, dass** das Abtrennmittel (5) als im Wesentlichen U-förmiger Trennbügel ausgebildet ist.

7. Vorrichtung nach mindestens einem der vorhergehenden Ansprüche, **dadurch gekennzeichnet, dass** an der feststehenden Scheibe (1) am oberen Scheibenrand ein Hydraulikzylinder (8) an einem Beschlag (7) drehbar gelagert ist, wobei der Hydraulikkolben (8a) mit seinem feinen Ende drehbar in einem Beschlag (9) an dem Abtrennmittel (5) angeordnet ist.

8. Vorrichtung nach mindestens einem der Ansprüche 1 bis 6, **dadurch gekennzeichnet, dass** an der feststehenden Scheibe (1) am oberen Scheibenrand der Hydraulikkolben (8a) eines Hydraulikzylinders (8) an einem Beschlag (7) drehbar angeordnet ist, wobei der Hydraulikzylinder (8) an einem Beschlag (9) an dem Abtrennmittel (5) angeordnet ist.

9. Vorrichtung nach einem der vorhergehenden Ansprüche, **dadurch gekennzeichnet, dass** an den freien Enden der Trennmittel jeweils eine Sauenstandtür angeschlagen ist.

10. Schwenkbare Abtrennvorrichtung nach mindestens einem der vorhergehenden Ansprüche, in Kombination mit einem oder mehreren solcher Abtrennvorrichtungen, wobei diese fluchtend unter Ausbildung eines Sauenstalles mit mehreren Sauenständen angeordnet sind, und wobei die oberen Bereiche der Anschläge (7) durch eine horizontal verlaufende Stange (10) und die oberen Bereiche der Anschläge (9) durch eine horizontal verlaufende Stange (11) miteinander verbunden sind, und wobei ein Hydraulikzylinder (8) mit einem Hydraulikkolben (8a) zwischen den Stangen (10) und (11) angeordnet ist.

## Claims

1. Pivotable separation device for a sow sty for group rearing, having a stationary circular disc (1) having a base (3), on or in which disc (1) a second circular disc (2) is centrally supported rotatably about a shaft (4), separation means (5) being arranged on the second disc (2).

2. Device according to claim 1, **characterised in that** the stationary disc (1) has a continuous edge (1a); **in that** the second disc (2) has a slightly smaller diameter than the stationary disc (1) and also has a continuous edge (2a), the stationary disc (1) overlapping the second disc (2) in the manner of a cover.

3. Device according to claim 1 or 2, **characterised in that** a feeding trough (6) is arranged on the stationary disc (1) close to the ground.

4. Device according to at least any one of claims 1 to 3, **characterised in that** the base (3) is constructed in a U-shaped manner having two members (3a) which are constructed in a substantially perpendicular manner and a member (3b) which is constructed in a substantially horizontal manner and in which the shaft (4) is supported.

5. Device according to at least any one of the preceding claims, **characterised in that** the separation means (5) is constructed as a separation grid.

6. Device according to at least any one of claims 1 to 4, **characterised in that** the separation means (5) is constructed as a substantially U-shaped curved separation member.

7. Device according to at least any one of the preceding claims, **characterised in that** a hydraulic cylinder (8) is rotatably supported on a fitting (7) on the stationary disc (1) at the upper disc edge, the hydraulic piston (8a) being rotatably arranged in a fitting (9) on the separation means (5) with the free end thereof.

8. Device according to at least any one of claims 1 to 6, **characterised in that** the hydraulic piston (8a) of a hydraulic cylinder (8) is rotatably arranged on a fitting (7) on the stationary disc (1) at the upper disc edge, the hydraulic cylinder (8) being arranged on a fitting (9) on the separation means (5).

9. Device according to any one of the preceding claims, **characterised in that** a sow pen door is in each case fixed to the free ends of the separation means.

10. Pivotable separation device according to at least any one of the preceding claims, in combination with one or more separation devices of this type, these devices being arranged in alignment, with a sow sty having a plurality of sow pens being formed, and the upper regions of the stops (7) being connected to each other by means of a horizontally extending rod (10) and the upper regions of the stops (9) being connected to each other by means of a horizontally extending rod (11), and a hydraulic cylinder (8) having a hydraulic piston (8a) being arranged between the rods (10) and (11).

## Revendications

1. Dispositif pivotant de séparation destiné à une étable pour truies pour un élevage en groupe, comportant un plateau circulaire fixe (1) avec un socle (3) sur lequel ou dans lequel repose, au centre, un deuxième plateau circulaire (2) pivotant autour d'un axe (4), moyennant quoi, sur le deuxième plateau (2) sont disposés des moyens de séparation (5).

2. Dispositif selon la revendication 1, **caractérisé en ce que** le plateau fixe (1) présente un bord circulaire (1a), **en ce que** le deuxième plateau (2) a un diamètre quelque peu inférieur à celui du plateau fixe (1) et présente également un bord circulaire (2a), moyennant quoi le disque fixe (1) dépasse, comme un couvercle, du deuxième plateau (2).

3. Dispositif selon l'une quelconque des revendications 1 ou 2, **caractérisé en ce que**, sur le plateau fixe (1), à proximité du sol, est disposée une auge (6).

4. Dispositif selon au moins l'une quelconque des revendications 1 à 3, **caractérisé en ce que** le socle (3) présente une forme de U et comporte deux côtés (3a) disposés sensiblement verticalement, et un côté (3b) disposé sensiblement horizontalement, dans lequel est disposé l'axe (4).

5. Dispositif selon au moins l'une quelconque des revendications précédentes, **caractérisé en ce que** les moyens de séparation (5) sont configurés sous la forme d'une grille de séparation.

6. Dispositif selon au moins l'une quelconque des revendications 1 à 4, **caractérisé en ce que** les moyens de séparation (5) sont configurés sensiblement sous la forme d'étrier en forme de U.

7. Dispositif selon au moins l'une quelconque des revendications précédentes, **caractérisé en ce que**, sur le plateau fixe (1), au niveau du bord supérieur du plateau, un cylindre hydraulique (8) est disposé en rotation sur une garniture (7), moyennant quoi le piston hydraulique (8a) est disposé de manière à pouvoir toumer, avec son extrémité fine, dans une gamiture (9) sur les moyens de séparation (5).

8. Dispositif selon au moins l'une quelconque des revendications 1 à 6, **caractérisé en ce que** le plateau fixe (1) est disposé de manière à pouvoir tourner sur le bord circulaire supérieur des pistons hydrauliques (8a) d'un cylindre hydraulique (8) au niveau d'une garniture (7), moyennant quoi le cylindre hydraulique (8) est disposé au niveau d'une garniture (9) sur les moyens de séparation (5).

9. Dispositif selon l'une quelconque des revendications précédentes, **caractérisé en ce que**, au niveau des extrémités libres des moyens de séparation, est chaque fois fixée une porte de stalle à truies.

10. Dispositif pivotant de séparation selon au moins l'une quelconque des revendications précédentes, combiné à un ou plusieurs dispositifs de séparation de ce type, moyennant quoi ceux-ci sont disposés en étant alignés, en formant une étable pour truies avec plusieurs stalles pour truies, et moyennant quoi les zones supérieures des butées (7) sont reliées les unes aux autres par une barre horizontale (10), et les zones supérieures des butées (9) sont reliées les unes aux autres par une barre horizontale (11), et moyennant quoi un cylindre hydraulique (8) est disposé avec un piston hydraulique (8a) entre les barres (10) et (11).
